# EUROPÄISCHE PATENTANMELDUNG

(11) **EP 1 790 414 A1**
(43) Veröffentlichungstag der Anmeldung: **30.05.2007**
(21) Anmeldenummer: 06124530.4
(22) Anmeldetag: 22.11.2006
(51) Int. Cl.: B01L 3/00, C12N 15/10

(54) **Proben-Röhrchen und System zum Aufbewahren und Bereitstellen von Nukleinsäure-Proben**

(30) Priorität: 23.11.2005 US 739113 P; 23.11.2005 CH 18732005
(71) Anmelder: Tecan Trading AG, 8708 Männedorf (CH)
(72) Erfinder: Elsener Donat, 3600, Thun (CH)
(74) Vertreter: OK pat AG

(57) **Zusammenfassung**

Die Erdfindung betrifft ein Proben-Röhrchen zum Aufbewahren und Bereitstellen von Nukleinsäure enthaltenden Proben, ein System mit einer Vielzahl von in individuellen Aufnahmekavitäten von Racks (1) angeordneten und zusammen mit diesen Racks (1) robotisiert transportierbaren Proben-Röhrchen (2) zum individuellen Aufbewahren und Bereitstellen einer Vielzahl von Nukleinsäure enthaltenden Proben, sowie eine entsprechende Verwendung von Racks (1) und Proben-Röhrchen (2). Dabei sind die vorzugsweise 96 oder 384 Aufnahmekavitäten (3) der bevorzugt mit einer SBS Standfläche versehenen Racks (1) und die Proben-Röhrchen (2) zudem zum robotisierten Entfernen dieser Proben-Röhrchen (2) aus diesen Aufnahmekavitäten (3) ausgebildet. Die erfindungsgemässen Proben-Röhrchen 2 sind dadurch gekennzeichnet, dass sie einen inneren Absatz (4) zum Aufnehmen und einen Klemmkörper (5) zum klemmenden Fixieren einer einzigen zumindest eine, bevorzugt individuelle, DNA-Probe enthaltenden Portion (6) eines Proben-Trägers aufweisen, wobei der Proben-Träger ausgewählt ist aus einer Gruppe, die FTA-Papier, Filterpapiere, Zellulosemembranen und Trenngele umfasst.

## Beschreibung

Die Erfindung betrifft gemäss dem Oberbegriff des unabhängigen Anspruchs 1 ein Proben-Röhrchen zum Aufbewahren und Bereitstellen von Nukleinsäure enthaltenden Proben. Die Erfindung betrifft gemäss dem Oberbegriff des unabhängigen Anspruchs 13 ein System mit einer Vielzahl von in individuellen Aufnahmekavitäten von Racks angeordneten und zusammen mit diesen Racks robotisiert transportierbaren Proben-Röhrchen. Zu diesem Zweck weisen die Racks vorzugsweise eine SBS Standfläche auf. Diese Proben-Röhrchen sind zum Aufbewahren und Bereitstellen einer Vielzahl von Nukleinsäure enthaltenden Proben ausgebildet. Zudem sind die vorzugsweise 96 oder 384 Aufnahmekavitäten der Racks und die Proben-Röhrchen zum robotisierten Entfernen dieser Proben-Röhrchen aus diesen Aufnahmekavitäten ausgebildet. Die Erfindung betrifft des Weiteren die Verwendung von in individuellen Aufnahmekavitäten von Racks mit SBS Standfläche angeordneten und zusammen mit diesen robotisiert transportierbaren Proben-Röhrchen. Die Aufnahmekavitäten der Racks und diese Proben-Röhrchen sind zudem zum robotisierten Entfernen von einem oder mehreren dieser Proben-Röhrchen aus diesen Aufnahmekavitäten ausgebildet. Ausserdem betrifft diese Erfindung die Verwendung Proben-Trägern zum Aufbewahren und Bereitstellen von Nukleinsäure enthaltenden Proben.

Die Desoxyribonukleinsäure (DNA) in Blutproben, im Folgenden kurz "Blut-DNA" genannt, wird zum Diagnostizieren von genetisch bedingten Krankheiten, zur Diagnose und zum Überwachen von parasitischen Erkrankungen im Blut, wie z.B. Malaria, für die Bestimmung der Elternschaft und zur Überwachung anderer aussergewöhnlicher Zellpopulationen im Blut, wir dies bei Neoplasien vorkommen kann, verwendet. Im Zusammenhang mit der vorliegenden Erfindung wird hier der Ausdruck "Blut-DNA" verwendet, wobei damit auch alle DNA-Quellen gemeint sind, die normalerweise im Blut vorkommen können. Somit umfasst dieser Begriff auch die DNA des Patienten, von dem Blut genommen wurde, aber auch alle DNA in irgendwelchen, im Blut dieses Patienten zirkulierenden Organismen.

Der Begriff "DNA-Probe" umfasst neben den eben erwähnten "Blut-DNA" alle Proben, die Nukleinsäuren enthalten, sei dies nun Desoxyribonukleinsäure (DNA) und/oder Ribonukleinsäure (RNA). Als Quellen für diese Nukleinsäuren, welche im Übrigen auch synthetisch hergestellt sein können, können alle Lebewesen wie Menschen, Tiere, Pflanzen und Mikroorganismen, aber auch Viren dienen. Die Nukleinsäuren können auch aus biochemischen Bibliotheken (sogenannten "Libraries") stammen.

Aus dem Stand der Technik (vgl. z.B. US 5,496,562) ist ein solides bzw. festes Medium bekannt, mit welchem Blut-DNA, oder allgemein Nukleinsäure-Proben aufbewahrt und transportiert werden können. Dieses Trocken-Medium besteht aus einer festen, auf Zellulose basierenden Matrix und aus einer Verbindung, die im Wesentlichen aus einer schwachen Base, einem Cheliermittel zum Binden metallischer Ionen, einem anionischen oberflächenaktiven Agens oder einem anionischen Detergens und allfällig Harnsäure oder einem Harnstoffsalz besteht. Dieses Medium ist unter dem Namen FTA-Papier bekannt und wird z.B. durch die Firma Whatman plc, Kent ME16 OLS (England) unter dem Namen WHATMAN^{®} oder FTA^{®} TECHNOLOGY vertrieben. Die im FTA-Papier enthaltenen Chemikalien lysieren die Blutzellen und konservieren die DNA. Diese Chemikalien werden dann aktiviert, wenn eine biologische Flüssigkeit die Oberfläche des FTA-Papiers berührt. Eine zusätzliche Eigenschaft dieser chemischen Behandlung ist die Inaktivierung von Bakterien und Viren. Damit sind die Proben von Kontamination und Wachstum von Mikroorganismen geschützt. Zusätzlich ist aber auch der Benutzer gegenüber vor einem allfälligen biologischen Unfall (Biohazard) geschützt. Standardmässig werden scheibenförmige Portionen dieses Trägermediums mit einem Durchmesser von etwa 1.2 mm von Hand aus diesen mit einer Blutprobe versehenen FTA-Papieren ausgestanzt und in Reaktionsröhrchen überführt. Die Scheiben werden dann schrittweise gewaschen, indem in diese Reaktionsröhrchen ein spezielles Reinigungsagens dispensiert, diese Reaktionsröhrchen geschüttelt und dann das Reinigungsagens wieder abgesogen wird.

Neben dem FTA-Papier können auch Filterpapiere, Zellulosemembranen und Trenngele als Trägermedien (oder einfach "Träger" oder "Proben-Träger") für Nukleinsäure enthaltende Proben verwendet werden.

Die Blut-DNA kann aber auch von einer eines Verbrechens verdächtigten Person stammen. Das auf forensische Wissenschaft spezialisierte Labor des Südafrikanischen Polizei Service (SAPS) beschäftigt sich mit der Etablierung eines vollautomatisierten Labors für die genetische Identifikation. Aus diesem Grund unterhält der SAPS eine forensische DNA-Datenbank. Von dem SAPS ist eine sogenannte Marshall Kassette bekannt, welche aus einem Kunststoffrahmen mit Barcode und drei in diesen Rahmen eingesenkten Töpfchen mit je einem FTA-Papier gebildet wird. Die drei FTA-Papiere werden bei der Blutentnahme mit je einem Tropfen Blut versehen, welches innerhalb von wenigen Minuten eintrocknet. Diese beladenen Kassetten werden dann ins Labor transportiert. Im Gegensatz zur oben beschriebenen Standardprozedur werden die Kassetten zuerst mittels Vakuumfiltrierung in einem robotisierten Liquidhandler gewaschen und darauf in einem Inkubator getrocknet. Erst dann werden scheibenförmige Proben aus den FTA-Papieren herausgestanzt und in eine mit einem Barcode versehene PCR-Platte (PCR = polymerase chain reaction) mit 96 Wells überführt. Ein zweiter robotisierter Liquidhandler gibt die standardmässig verwendete PCR Reaktionsmischung in die 96 Wells der PCR-Mikroplatte, welche darauf mit einer hitzebeständigen Folie abgedeckt wird. Daraufhin wird die Polymerase-Kettenreaktion zur Anreicherung der in den Proben enthaltenen DNA durchgeführt.

Aus dem Stand der Technik (z.B. von ABgene, Epsom, KT19 9AP, United Kingdom) ist eine grosse Zahl von Racks zur Aufbewahrung und zum Transport von Probenröhrchen bekannt. In robotisierten Laboratorien sind sogenannte "Micro-Tube Cluster Racks" speziell bevorzugt, weil diese eine Standfläche aufweisen, welche dem sogenannten "Foot Print" einer Mikroplatte nach dem SBS-Standard (SBS = Society for Biomolecular Screening) entspricht und deshalb oft als "SBS footprint" bezeichnet wird. Inzwischen wurde dieser Standard vom ANSI (American National Standards Institute) als ANSI/SBS 1-2004 normiert. Racks mit 96 Mikro-Röhrchen sind bekannt. Der aktuelle Anmelder selbst vertreibt ebenfalls Micro-Tube Cluster Racks mit 96 oder 384 Mikro-Röhrchen unter dem Handlesnahmen REMP Tube Technology^{™}. Diese unterscheiden sich im Wesentlichen dadurch von den Racks und Mikro-Röhrchen aus dem übrigen Stand der Technik, dass das Bereitstellen der Proben-Röhrchen erfolgt, indem zumindest zwei Racks übereinander angeordnet werden und Probenröhrchen mit einen Manipulator aus dem obenliegenden Rack in entsprechend positionierte Aufnahmekavitäten des untenliegenden Racks gestossen werden. Umgekehrt kann dieser Übergabeprozess aber auch dadurch erfolgen, dass Probenröhrchen mit einen Manipulator aus dem untenliegenden Rack in entsprechend positionierte Aufnahmekavitäten des obenliegenden Racks gestossen werden (vgl. z. B. EP 0 904 841 B1 oder US 6,827,907 B2).

Einen anderen Approach hat die Firma GenVault (Carlsbad, California 92008, USA) gewählt, indem sie Mikroplatten mit z.B. 384 Wells anbietet, welche alle untereinander durch ein gemeinsames FTA-Papier verbunden sind. Mit ca. 4 ml einer Blutprobe entstehen dadurch 384 Aliquote der gleichen Probe. Alternativ dazu wird in die 384 Wells einer Mikroplatte je eine Scheibe eines FTA-Papiers mit einem Durchmesser von ca. 3.4 mm gelegt, so dass 384 unterschiedliche Proben auf einer Mikroplatte untergebracht sein können. Als Kompromiss werden auch Mikroplatten angeboten, die in sechs Regionen mit je 40 Aliquots unterteilt sind.

Alle bisher aus dem Stand der Technik bekannten, FTA-Papier verwendenden Methoden eignen sich nicht für das robotisierte Bereitstellen von individuellen DNA-Proben. Der vorliegenden Erfindung liegt deshalb die Aufgabe zu Grunde, das robotisierte Bereitstellen von individuellen DNA-Proben auf FTA-Papieren oder anderen Trägern zu verbessern.

Diese Aufgabe wird gemäss einem ersten Aspekt dadurch gelöst, dass ein Proben-Röhrchen zum Aufbewahren und Bereitstellen von Nukleinsäure enthaltenden Proben vorgeschlagen wird, das dadurch gekennzeichnet ist, dass es einen inneren Absatz zum Aufnehmen und einen Klemmkörper zum klemmenden Fixieren einer einzigen zumindest eine DNA-Probe enthaltenden Portion eines Proben-Trägers aufweist, wobei der Proben-Träger ausgewählt ist aus einer Gruppe, die FTA-Papier, Filterpapiere, Zellulosemembranen und Trenngele umfasst.

Diese Aufgabe wird gemäss einem zweiten Aspekt dadurch gelöst, dass ein System mit einer Vielzahl von in individuellen Aufnahmekavitäten von Racks angeordneten und zusammen mit diesen Racks robotisiert transportierbaren Proben-Röhrchen zum individuellen Aufbewahren und Bereitstellen einer Vielzahl von Nukleinsäure enthaltenden Proben vorgeschlagen wird. Dabei sind die, vorzugsweise 96 oder 384 Aufnahmekavitäten der bevorzugt mit einer SBS Standfläche versehenen Racks und die Proben-Röhrchen zudem zum robotisierten Entfernen von einem oder mehreren dieser Proben-Röhrchen aus diesen Aufnahmekavitäten ausgebildet. Dabei weist jedes Proben-Röhrchen einen inneren Absatz zum Aufnehmen und einen Klemmkörper zum klemmenden Fixieren einer einzigen zumindest eine, vorzugsweise individuelle, DNA-Probe enthaltenden Portion eines Proben-Trägers auf, wobei der Proben-Träger ausgewählt ist aus einer Gruppe, die FTA-Papier, Filterpapiere, Zellulosemembranen und Trenngele umfasst. Das erfindungsgemässe System ist dadurch gekennzeichnet, dass es zumindest zwei übereinander anordenbare Racks und zumindest einen Manipulator umfasst, wobei diese Racks im System so übereinander positionierbar sind, dass zumindest ein Teil ihrer Kavitäten im Register untereinander stehen, und wobei ein Manipulator zum Stossen von Proben-Röhrchen aus einem obenliegenden Rack in entsprechend positionierte Aufnahmekavitäten eines untenliegenden Racks und/oder ein Manipulator zum Stossen von Proben-Röhrchen aus einem untenliegenden Rack in entsprechend positionierte Aufnahmekavitäten eines obenliegenden Racks ausgebildet ist.

Diese Aufgabe wird gemäss einem dritten Aspekt dadurch gelöst, dass die Verwendung von in individuellen Aufnahmekavitäten von Racks mit SBS Standfläche angeordneten und zusammen mit diesen robotisiert transportierbaren Proben-Röhrchen und von Proben-Trägern zum Aufbewahren und Bereitstellen von Nukleinsäure enthaltenden Proben vorgeschlagen wird. Dabei sind die Aufnahmekavitäten der Racks und die Proben-Röhrchen zudem zum robotisierten Entfernen von einem oder mehreren dieser Proben-Röhrchen aus diesen Aufnahmekavitäten ausgebildet. Dabei wird jeweils eine zumindest eine DNA-Probe enthaltende Portion eines Proben-Trägers in einem Proben-Röhrchen aufbewahrt und dieses Proben-Röhrchen in einer Aufnahmekavität eines Racks positioniert, wonach die Proben-Röhrchen mit den Nukleinsäure enthaltenden Proben in einer vorbestimmten und variierbaren Anzahl, vorzugsweise 1 bis 384 Proben-Röhrchen bereitgestellt werden. Dabei sind die Proben-Träger ausgewählt aus einer Gruppe, die FTA-Papier, Filterpapiere, Zellulosemembranen und Trenngele umfasst. Dabei kann die jeweilige, vorzugsweise eine individuelle Probe enthaltende Portion in den Proben-Röhrchen geklemmt befestigt oder einfach in diese Röhrchen eingelegt sein, sofern diese Proben-Röhrchen einen unteren Abschluss aufweisen. Die erfindungsgemässe Verwendung ist dadurch gekennzeichnet, dass zumindest zwei Racks so übereinander angeordnet werden, dass zumindest ein Teil ihrer Kavitäten im Register untereinander stehen, und dass mit zumindest einem Manipulator Proben-Röhrchen aus einem obenliegenden Rack in entsprechend positionierte Aufnahmekavitäten eines untenliegenden Racks und/oder mit zumindest einem Manipulator Proben-Röhrchen aus einem untenliegenden Rack in entsprechend positionierte Aufnahmekavitäten eines obenliegenden Racks gestossen werden.

Zusätzliche, bevorzugte und erfinderische Merkmale ergeben sich jeweils aus den abhängigen Ansprüchen.

Vorteile, die sich aus der Verwendung des erfindungsgemässen Proben-Röhrchens bzw. eines solche Röhrchen verwendenden Systems ergeben, umfassen die folgende Aspekte:
- Den selektiven Zugriff auf individuelle Einzelproben, die in individuellen Proben-Röhrchen in Racks gelagert oder frisch in solche Röhrchen eingeführt wurden;
- Das beliebige Zusammenstellen von Sets aus diesen Einzelproben;
- Die beliebige Kombination von solchen Sets;
- Das beliebige Gruppieren von bestimmten Proben innerhalb dieser Sets;
- Das beliebige Umgruppieren dieser Sets durch das Übertragen von Proben-Röhrchen auf andere Racks.

Die erfindungsgemässen Proben-Röhrchen, das erfindungsgemässe System bzw. die erfindungsgemässe Verwendung werden nun an Hand von schematischen, den Umfang der Erfindung nicht beschränkenden Zeichnungen von beispielhaften Ausführungsformen im Detail erläutert. Dabei zeigen:
- Fig. 1: einen Längsschnitt eines erfindungsgemässen Proben-Röhrchens, gemäss einer ersten Ausführungsform;
- Fig. 2: einen Längsschnitt eines erfindungsgemässen Proben-Röhrchens, gemäss einer zweiten Ausführungsform;
- Fig. 3: einen Längsschnitt eines erfindungsgemässen Proben-Röhrchens, gemäss einer dritten Ausführungsform;
- Fig. 4: einen Längsschnitt eines erfindungsgemässen Proben-Röhrchens, gemäss einer vierten Ausführungsform;
- Fig. 5: einen Längsschnitt eines erfindungsgemässen Proben-Röhrchens, gemäss einer fünften Ausführungsform;
- Fig. 6: einen Längsschnitt eines erfindungsgemässen Proben-Röhrchens, gemäss einer sechsten Ausführungsform;
- Fig. 7: einen Vertikalschnitt durch eine Anordnung von zwei Teilen eines Proben-Röhrchens zum Ausstanzen einer Probenportion:
Fig. 7A Platzieren eines Proben-Trägers auf dem von einer Halterung gestützten Unterteil des Proben-Röhrchens;
Fig. 7B Ausstanzen einer Probenportion aus dem Proben-Träger mit der Schneide des Oberteils des Proben-Röhrchens;
Fig. 7C Klemmen der Probenportion und dichtendes Zusammenfügen der beiden Teile des Proben-Röhrchens;
- Fig. 8: eine überarbeitete, dreidimensionale Darstellung eines Racks und von Probenröhrchen aus dem Stand der Technik (vgl. Fig. 1 in US 6,827,907);
- Fig. 9: einen Vertikalschnitt durch die Anordnung von mindestens zwei Racks gemäss dem auf den erfindungsgemässen Proben-Röhrchen basierenden System zum Transferieren von Proben-Röhrchen von einem Rack zum anderen.

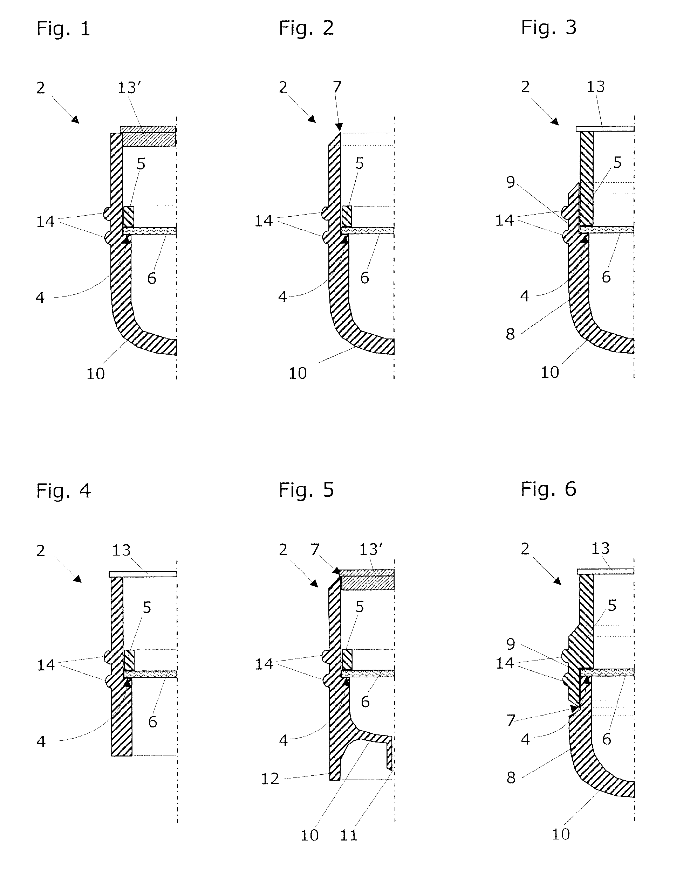

Figur 1 zeigt einen Längsschnitt eines erfindungsgemässen Proben-Röhrchens, gemäss einer ersten Ausführungsform. Dieses Proben-Röhrchen 2 ist zum Aufbewahren und Bereitstellen von Nukleinsäure enthaltenden Proben ausgebildet. Dazu weist es einen inneren Absatz 4 zum Aufnehmen und einen Klemmkörper 5 zum klemmenden Fixieren einer einzigen, vorzugsweise eine individuelle DNA-Probe enthaltenden Portion 6 eines Proben-Trägers auf. Dieser Proben-Träger kann ein FTA-Papier, ein Filterpapier, eine Zellulosemembran oder ein Trenngel sein. Dabei wird vorzugsweise eine ausgestanzte, scheibenförmige Portion 6 dieses Proben-Trägers an ihrem Rand zwischen dem inneren Absatz 4 und dem Klemmkörper eingeklemmt. Ob die scheibenförmige Portion 6 an ihrem ganzen Umfang zwischen Absatz 4 und Klemmkörper 5 eingeklemmt ist oder nicht, ist nicht entscheidend. Ebenso kann die Portion 6 in ihrer Form von einer kreisrunden Scheibe abweichen; auch eine drei-, vier- oder mehreckige Form der Portion 6 ist möglich. Zudem kann diese Portion auch durch Ausschneiden von dem übrigen Trägermedium abgetrennt worden sein. Wichtig ist jedoch, dass zumindest ein Teil des Randes dieser Portion (und seien es nur ein paar Fasern eines Filterpapiers) zwischen Absatz 4 und Klemmkörper 5 eingeklemmt ist, so dass diese Portion, z.B. bei Waschvorgängen nicht aus dem Röhrchen gespült werden oder sonstwie verloren gehen kann.

Der Klemmkörper 5 ist zum Anordnen innerhalb des Proben-Röhrchens 2 ausgebildet. Er ist hier ringförmig ausgebildet. Abweichend von dieser Darstellung kann der Klemmkörper 5 auch stern- oder kastenförmig ausgebildet sein. Er kann auch eine Kombination dieser Formen oder auch eine Gitterstruktur aufweisen. Wichtig ist, dass dieser Klemmkörper 5 in einem Reibschluss innerhalb des Röhrchens 2 angeordnet werden kann, so dass er einen sicheren Sitz einnimmt und Teile des Proben-Trägers zwischen sich und dem Absatz 4 klemmend festhält. Sollten zusätzlich Teile des Proben-Trägers zwischen dem Klemmkörper und der im wesentlichen senkrechten Innenwand des Röhrchens eingeklemmt sein, so ist dies durchaus erwünscht, weil es zusätzlich zum Festhalten der Proben-Träger in den Röhrchen dient.

Dieses Proben-Röhrchen 2 gemäss der ersten Ausführungsform weist einen unteren Abschluss 10 auf, der den unteren Teil des Proben-Röhrchens 2 verschliesst. Zudem ist dieses Röhrchen an seiner Oberseite mit einem Stopfen 13' oder einem sogenannten "Cap" verschlossen. Besonders bevorzugt sind in diesem Fall die Caps, die als REMP CAPMAT96 oder als einzelne solche Caps vom aktuellen Anmelder angeboten werden. Dieses Proben-Röhrchen 2 könnte an seiner Oberseite auch mit einer Folie 13 verschlossen sein (vgl. z.B. Fig. 3 oder 4). Besonders bevorzugt ist in diesem Falle das Verschliessen mit einer unter Erwärmung applizierbaren Folie, die unter dem Handelsnamen REMP THERMO-SEAL™ vom aktuellen Anmelder vertrieben wird.

Figur 2 zeigt einen Längsschnitt eines erfindungsgemässen Proben-Röhrchens, gemäss einer zweiten Ausführungsform. Wie das Proben-Röhrchen 2 in Fig. 1 ist dieses Röhrchen im wesentlichen zylindrisch ausgebildet und weist zumeist die selben Merkmale auf. Dieses Röhrchen weist jedoch im Gegensatz zum Erstgenannten an seiner Oberseite eine Schneide 7 auf, welche sich zum Ausstanzen einer aufzunehmenden Portion 6 eines Proben-Trägers eignet. Wegen der durch die Schneide 7 im Wesentlichen auf eine Kreislinie reduzierten obersten Oberfläche des Proben-Röhrchens 2 ist hier das Verschliessen mit einem Stopfen 13' eher geeignet als das Verwenden einer Thermofolie 13 (vgl. z.B. Fig. 5).

Figur 3 zeigt einen Längsschnitt eines erfindungsgemässen Proben-Röhrchens, gemäss einer dritten Ausführungsform. Wie schon das Proben-Röhrchen 2 in Fig. 1 ist dieses Röhrchen im wesentlichen ebenfalls zylindrisch ausgebildet und weist zumeist die selben Merkmale auf. Dieses Röhrchen weist jedoch im Gegensatz zum Erstgenannten einen Klemmkörper 5 auf, der ein im wesentlichen zylindrisches Oberteil des Proben-Röhrchens 2 ist. Dabei umfasst dieses Proben-Röhrchen 2 zudem ein Unterteil 8, das mit diesem Oberteil 5 dichtend zusammensteckbar ausgebildet ist. Das Unterteil 8 dieses Proben-Röhrchen 2 weist an seinem oberen Ende eine Schneide 7 zum Ausstanzen einer aufzunehmenden Portion 6 eines Proben-Trägers auf. Wie jenes in Fig. 1 ist auch dieses Proben-Röhrchen 2 an seiner Oberseite verschlossen. Im Gegensatz zu jenem ist dieses Proben-Röhrchen 2 mit einer Folie 13 verschlossen. Besonders bevorzugt ist in diesem Falle das Verschliessen mit einer unter Erwärmung applizierbaren Folie, die unter dem Handelsnamen REMP THERMO-SEAL^{™} vom aktuellen Anmelder vertrieben wird. Das Verschliessen dieser Proben-Röhrchen 2 kann schon vor dem Ausstanzen der Probenportionen geschehen. Dabei ist das Verwenden einer klar durchsichtigen Folie, die REMP CLEAR THERMO-SEAL^{™} speziell bevorzugt, weil z.B. im Falle einer Blut-DNA-Probe, der Blutstropfen beim Ausstanzen anvisiert werden kann. Soll das Proben-Röhrchen 2 erst nach dem Ausstanzen und Einklemmen des Proben-Trägers verschlossen werden, so können auch andere Folien, wie z.B. die REMP PIERCABLE THERMO-SEAL^{™} oder die REMP REMOVABLE THERMO-SEAL^{™} eingesetzt werden, je nachdem die Folie bei der Bearbeitung der Probe von der Nadel eines Pipetieres durchstochen oder zu dieser Bearbeitung entfernt werden soll.

Figur 4 zeigt einen Längsschnitt eines erfindungsgemässen Proben-Röhrchens, gemäss einer vierten Ausführungsform. Wie das Proben-Röhrchen 2 in Fig. 1 ist dieses Röhrchen im wesentlichen zylindrisch ausgebildet und weist zumeist die selben Merkmale auf. Dieses Röhrchen weist jedoch im Gegensatz zum Erstgenannten an seiner Unterseite keinen unteren Abschluss 10 auf, so dass es unten offen ist. Diese Ausführungsform hat den Vorteil, dass die Waschlösungen einfach durchgespült werden können. Allerdings muss gewährleistet sein, dass dadurch die Nachbarproben nicht kontaminiert werden können. Ist die Folie 13 für diese vierte Ausführungsform mit Nadeln durchstechbar und wieder selbstabdichtend ausgebildet, so können die Röhrchen nach dem ausgiebigen Waschen umgedreht werden, so dass die Folie 13 den unteren Abschluss bildet. Zudem kann das umgedrehte Röhrchen an seiner nun offenen Oberseite zusätzlich mit einer Folie 13 oder mit einem Stopfen 13' verschlossen werden. Bei dieser Ausführungsform ist es von grösster Wichtigkeit, dass die Probenportion 6 sicher im Proben-Röhrchen 2 befestigt, also eingeklemmt und gehalten ist.

Figur 5 zeigt einen Längsschnitt eines erfindungsgemässen Proben-Röhrchens, gemäss einer fünften Ausführungsform. Wie das Proben-Röhrchen 2 in Fig. 2 ist dieses Röhrchen im wesentlichen zylindrisch ausgebildet und weist zumeist die selben Merkmale auf. Dieses Röhrchen weist an seiner Oberseite ebenfalls eine Schneide 7 auf, welche sich zum Ausstanzen einer aufzunehmenden Portion 6 eines Proben-Trägers eignet. Wegen der durch die Schneide 7 im Wesentlichen auf eine Kreislinie reduzierten obersten Oberfläche des Proben-Röhrchens 2 ist hier das Verschliessen mit einem Stopfen 13' eher geeignet als das Verwenden einer Thermofolie 13. Dieses Röhrchen weist jedoch im Gegensatz zu jenem von Fig. 2 an seiner Unterseite einen unteren Abschluss 10 auf, der in der Mitte eine Auslaufkapillare 11 aufweist. Der Durchmesser und die Länge dieser Kapillare sind dabei so bemessen, dass ohne Anwendung von Zentripetalkräften auf das Röhrchen, eines Überdruckes auf dessen Oberteil oder eines Unterdrucks auf dessen Unterteil keine Flüssigkeit spontan aus der Kapillare austreten kann. So können z.B. Waschflüssigkeiten von oben in das Röhrchen pipettiert und auch von oben wieder daraus abgesogen werden. Soll jedoch Flüssigkeit aus der Kapillare 11 austreten, so kann eines der eben genannten Mittel dazu verwendet werden, um das Proben-Röhrchen 2 zu entleeren. Zum Reduzieren der Kontaminationsgefahr für benachbarte Proben weist dieses Röhrchen zudem eine periphere Tropfenbarriere 12 auf.

Figur 6 zeigt einen Längsschnitt eines erfindungsgemässen Proben-Röhrchens, gemäss einer sechsten Ausführungsform. Wie das Proben-Röhrchen 2 in Fig. 3 ist dieses Röhrchen im wesentlichen zylindrisch ausgebildet und weist zumeist die selben Merkmale auf. Dieses Röhrchen weist ebenfalls einen Klemmkörper 5 auf, der ein im wesentlichen zylindrisches Oberteil des Proben-Röhrchens 2 ist. Dabei umfasst dieses Proben-Röhrchen 2 zudem ein Unterteil 8, das mit diesem Oberteil 5 dichtend zusammensteckbar ausgebildet ist. Besonders bevorzugt ist ein Oberteil 5, das an seinem unteren Ende eine Muffe 9 zum dichtenden Einstecken des jeweils anderen Teils des Proben-Röhrchens 2 aufweist. Diese Muffe 9 verstärkt in vorteilhafter Weise ein an sich dünnwandiges Röhrchen. Das Oberteil 5 weist an seinem unteren Ende eine Schneide 7 zum Ausstanzen einer aufzunehmenden Portion 6 eines Proben-Trägers auf. Das Unterteil 8 dieses Proben-Röhrchen 2 weist an seinem oberen Ende einen Absatz 4 zum Aufnehmen dieser Portion 6 auf. Wie jenes in Fig. 3 ist auch dieses Proben-Röhrchen 2 an seiner Oberseite mit einer Folie 13 verschlossen.

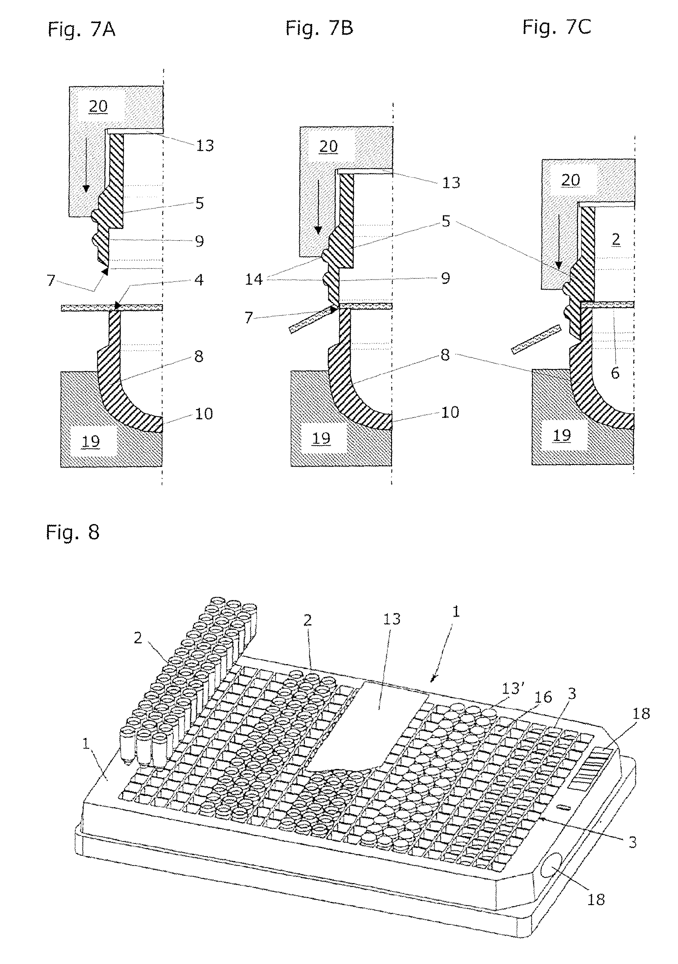

Figur 7 zeigt einen Vertikalschnitt durch eine Anordnung von zwei Teilen eines Proben-Röhrchens zum Ausstanzen einer Probenportion. Das gezeigte Proben-Röhrchen 2 entspricht dabei der sechsten Ausführungsform (vgl. Fig. 6) und das Oberteil 5 ist vorzugsweise mit einer klar durchsichtigen Folie 13 des Typs REMP CLEAR THERMO-SEAL^{™} verschlossen. Drei wesentliche Schritte des Probeneinschlusses sind dargestellt:

In Figur 7A wird ein Proben-Träger auf dem von einer Halterung 19 gestützten Unterteil 8 des Proben-Röhrchens 2 so platziert, dass die DNA-Probe praktisch in der Achse des Proben-Röhrchens angeordnet ist. Das dazu gehörende Oberteil 5 wird nun so positioniert, dass dessen Achse mit derjenigen des Unterteils 8 übereinstimmt. Zum einfacheren Verfolgen bzw. zum optischen Überwachen dieses Vorganges ist das Werkzeug 20, mit welchem das Oberteil 5 geführt wird, durchsichtig aus geführt oder weist zumindest im Bereich des Proben-Röhrchens 2 einen durchsichtigen Teil (nicht gezeigt) auf.

In Figur 7B wird das Oberteil 5 des Proben-Röhrchens 2 mit dem Werkzeug 20 abgesenkt. Dabei kann dieses Werkzeug mit der Hand oder von einem Roboter bewegt werden. Die Schneide 7 am unteren Ende des Oberteils 5 trennt den überschüssigen Teil des Probenträgers ab - eine Probenportion wird damit aus dem Proben-Träger ausgestanzt.

In Figur 7C wird durch das weiter Absenken des Oberteils 5 die abgetrennte Probenportion auf dem Absatz 4 des Unterteils 8 festgeklemmt. Zugleich werden die beiden Teile des Proben-Röhrchens 2 dicht zusammengefügt. Falls dies noch nicht geschehen ist, kann jedes Proben-Röhrchen 2 einzeln mit einer Folie 13 oder mit einem Stopfen 13' verschlossen werden. Dieses Röhrchen kann anschliessend in ein Rack 1 (vgl. Fig. 8) eingesteckt werden.

An Stelle des Absenkens des Oberteils 5 oder kombiniert mit demselben kann auch das Unterteil 8 des Proben-Röhrchens 2 angehoben werden; auch das Ausrichten der beiden Teile 5,8 eines Proben-Röhrchens 2 kann durch das Bewegen des Unterteils 8 ausgeführt werden (beides nicht gezeigt).

Figur 8 zeigt eine überarbeitete, dreidimensionale Darstellung eines Racks 1 und von Probenröhrchen aus dem Stand der Technik (vgl. Fig. 1 in US 6,827,907). Ein System mit einer Vielzahl von solchen Racks 1 mit SBS Standfläche ist ebenfalls aus US 6,827,907 bekannt. Diese Racks 1 weisen - in Anlehnung an Standardmikroplatten - eine Anzahl von z.B. 96, 384 oder 1536 von individuellen Aufnahmekavitäten 3 auf, in welchen je ein Probenröhrchen 2 individuell angeordnet ist. Zusammen mit diesen Racks 1 sind somit grosse Zahlen von Proben-Röhrchen 2 robotisiert transportierbar. Dieser Transport geschieht vorzugsweise mit einem sogenannten Mikroplattenhandler. Die Probenröhrchen 2 können zum individuellen Aufbewahren und Bereitstellen einer Vielzahl von Nukleinsäure enthaltenden Proben verwendet werden und sind selbst ebenfalls robotisiert von einem Rack 1 zum anderen transportierbar. Jedes der aus US 6,827,907 bekannten Probenröhrchen 2, aber auch jedes der erfindungsgemässen Proben-Röhrchen 2 kann in solche Racks 1 eingesetzt und robotisiert von einem Rack zum anderen übertragen werden. Jedes der in diesem System verwendeten, erfindungsgemässen Proben-Röhrchen 2 weist einen inneren Absatz 4 zum Aufnehmen und einen Klemmkörper 5 zum klemmenden Fixieren einer einzigen eine individuelle DNA-Probe enthaltenden Portion 6 eines Proben-Trägers auf.

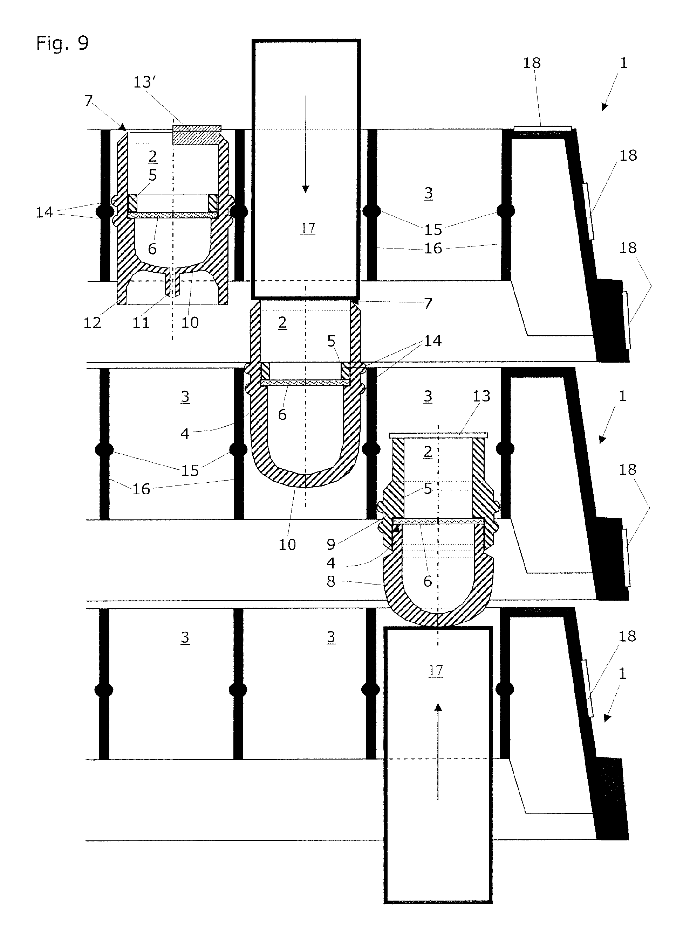

Zur Verwendung mit den Racks 1 in einem solchen System weist jedes Proben-Röhrchen 2 vorzugsweise an seinem Aussenumfang zwei parallele Rippen 14 auf, welche zum einschnappenden Positionieren der Proben-Röhrchen 2 an Erhebungen 15 von Trennwänden 16 dienen, welche die Aufnahmekavitäten 3 eines Racks 1 voneinander trennen (vgl. auch Fig. 9). Während einfachere Systeme nur ein Rack 1 aufnehmen können, umfassen bevorzugte Systeme zumindest zwei übereinander anordenbare Racks 1 und zumindest einen Manipulator 17 zum Stossen von Proben-Röhrchen 2 aus dem obenliegenden Rack 1 in entsprechend positionierte Aufnahmekavitäten 3 des untenliegenden Racks. Alternativ umfassen solchen bevorzugten Systeme zumindest zwei übereinander anordenbare Racks 1 und zumindest einen Manipulator 17 zum Stossen von Proben-Röhrchen 2 aus dem untenliegenden Rack 1 in entsprechend positionierte Aufnahmekavitäten 3 des obenliegenden Racks 1.

Die Röhrchen aus dem Stand der Technik und die erfindungsgemässen Proben-Röhrchen 2 können jedoch auch in solchen Systemen eingesetzt werden, die - an der gleichen oder an unterschiedlichen Stationen - Racks in drei übereinanderliegenden Ebenen einsetzen, so dass Proben-Röhrchen 2 aus dem obersten Rack 1 in das mittlere Rack 1 gestossen und gleichzeitig oder nacheinander Proben-Röhrchen 2 aus dem untersten Rack 1 in das mittlere Rack 1 gestossen werden können.

Alle diese Systeme können mit Manipulatoren 17 ausgerüstet sein, die zum gleichzeitigen Stossen von zwei oder mehr Proben-Röhrchen 2 ausgebildet sind. So können z.B. ganze Kolonnen oder Reihen von Proben-Röhrchen 2 gleichzeitig von einem Rack auf das andere übertragen werden. Alternative Manipulatoren können für das Herausziehen von Proben-Röhrchen 2 aus den Racks 1 ausgebildet sein (nicht gezeigt).

Die Racks 1 weisen bevorzugt eine SBS Standfläche auf und sind vorzugsweise mit einer Identifikation 18 versehen, so dass die Racks 1 jederzeit identifiziert werden können. Vorzugsweise umfasst eine solche Identifikation 18 eine Barcode, eine Radiofrequenz-Identifikations-Etikette, also ein RFID-Tag oder beides. Dabei soll angemerkt werden, dass insbesondere die RFID-Tags besonders bevorzugt sind, weil deren Umfang an gespeicherten Informationen viel grösser sein kann als beim Barcode. Zudem ist im Gegensatz zum Barcode kein direkter Sichtkontakt notwendig, um die Informationen eines RFID-Tags abzurufen. Ausserdem können auf RFID-Tags auch weitere Informationen, wie z.B. eine bereits ausgeführte Bearbeitung der Proben hinzugefügt werden.

Figur 9 zeigt einen Vertikalschnitt durch die Anordnung von mindestens zwei Racks gemäss dem auf den erfindungsgemässen Proben-Röhrchen 2 basierenden System zum Transferieren von Proben-Röhrchen von einem Rack zum anderen. Jedes der erfindungsgemässen Proben-Röhrchen 2 weist vorzugsweise an seinem Aussenumfang zwei parallele Rippen 14 zum einschnappenden Positionieren der Proben-Röhrchen 2 an Erhebungen 15 von Trennwänden 16 auf, welche die Aufnahmekavitäten 3 eines Racks 1 voneinander trennen. Diese Rippen 14 sind auch in den Figuren 1 bis 7 sichtbar. Alternativ kann jedes Proben-Röhrchen 2 eine horizontal umlaufende Vertiefung aufweisen, in welche eine entsprechende Erhebungen 15 von Trennwänden 16, welche die Aufnahmekavitäten 3 eines Racks 1 voneinander trennen, einschnappend eingreifen kann. Eine solche Vertiefung ergibt sich beispielsweise aus der gezeigten sechsten Ausführungsform zwischen der Muffe 9 des Oberteils 5 des Proben-Röhrchens 2 und einem Absatz am Umfang des unteren Teiles 8 desselben (vgl. Fig. 6 und 7). Zudem kann eine solche horizontal umlaufende Vertiefung an fast jeder Stelle des erfindungsgemässen Proben-Röhrchens 2 vorgesehen werden, unabhängig davon, ob es einteilig (vgl. Fig. 1, 2, 4 und 5) oder zweiteilig (vgl. Fig. 3, 6 und 7) ausgebildet ist.

Eine weitere Alternative zum einschnappenden Positionieren der Proben-Röhrchen 2 auf einer vorbestimmten Höhe in einer Kavität 3 eines Racks 1 ergibt sich daraus, dass Erhebungen an Proben-Röhrchen 2 in Vertiefungen von Trennwänden eingreifen können (nicht gezeigt).

Ein im wesentlichen senkrecht bewegbarer Manipulator 17 stösst in Fig. 9 gerade ein Proben-Röhrchen 2 vom obersten von drei Racks 1 in das Mittlere. Gleichzeitig stösst ein ebenfalls im wesentlichen senkrecht bewegbarer Manipulator 17 gerade ein Proben-Röhrchen 2 vom untersten von drei Racks 1 in das Mittlere. Dies ist deshalb möglich, weil alle Kompartimente 3 der vorzugsweise identisch ausgebildeten Racks 1 von oben und von unten gleichermassen zugänglich sind und weil die Racks 1 in einem System mit einer Vielzahl von in individuellen Aufnahmekavitäten von Racks 1 mit SBS Standfläche angeordneten und zusammen mit diesen Racks 1 robotisiert transportierbaren Proben-Röhrchen 2 zum individuellen Aufbewahren und Bereitstellen einer Vielzahl von Nukleinsäure enthaltenden Proben so übereinander positionierbar sind, dass die Kavitäten 3 im Register untereinander stehen. Wird nun eines der Racks 1 (z.B. das Mittlere) zwischen dem Übergeben der Proben-Röhrchen 2 bewegt, was z.B. auf einem Kreuztisch geschehen kann, so kann jedes der Proben-Röhrchen 2 aus dem obersten oder untersten Rack 1 an jede beliebige Kavitäten-Position des mittleren Racks 1 geschoben werden, falls diese noch nicht besetzt ist.

Selbstverständlich können auch in einem System, welches jeweils nur zwei Racks 1 übereinander positioniert, Manipulatoren 17 von oben, unten oder von beiden Seiten eingesetzt werden (nicht gezeigt). Zudem können die Anbringungsorte der Informationen 18 von den gezeigten abweichen. So können RFID-Tags beispielsweise auch an der Innenseite der Racks 1 befestigt werden, wo sie von Mikroplattenhandling-Robotern nicht beschädigt werden können.

Einem Fachmann naheliegende Kombinationen der gezeigten und/oder beschrieben Merkmale der erfindungsgemässen Proben-Röhrchen 2 gehören zum Umfang der vorliegenden Erfindung, auch wenn die einzelnen Merkmalskombinationen nicht in jedem Fall ausdrücklich dargestellt sind.

### Bezugszeichenliste:

- 1: Rack
- 2: Proben-Röhrchen
- 3: Aufnahmekavität
- 4: innerer Absatz
- 5: Klemmkörper; Oberteil
- 6: DNA-Probe enthaltende Portion
- 7: Schneide
- 8: Unterteil
- 9: Muffe
- 10: unterer Abschluss

- 11: Auslaufkapillare
- 12: periphere Tropfenbarriere
- 13: Folie
- 13': Stopfen
- 14: parallele Rippe
- 15: Erhebung
- 16: Trennwand
- 17: Manipulator
- 18: Identifikation
- 19: Halterung
- 20: Werkzeug

## Patentansprüche

1. Proben-Röhrchen zum Aufbewahren und Bereitstellen von Nukleinsäure enthaltenden Proben, **dadurch gekennzeichnet, dass** das Proben-Röhrchen (2) einen inneren Absatz (4) zum Aufnehmen und einen Klemmkörper (5) zum klemmenden Fixieren einer einzigen zumindest eine DNA-Probe enthaltenden Portion (6) eines Proben-Trägers aufweist, wobei der Proben-Träger ausgewählt ist aus einer Gruppe, die FTA-Papier, Filterpapiere, Zellulosemembranen und Trenngele umfasst.

2. Proben-Röhrchen (2) nach Anspruch 1, **dadurch gekennzeichnet, dass** die Portion (6) des Proben-Trägers eine einzige individuelle DNA-Probe enthält.

3. Proben-Röhrchen (2) nach Anspruch 1 oder 2, **dadurch gekennzeichnet, dass** der Klemmkörper (5) zum Anordnen innerhalb des Proben-Röhrchens (2) ausgebildet ist.

4. Proben-Röhrchen (2) nach Anspruch 3, **dadurch gekennzeichnet, dass** der Klemmkörper (5) ring-, stern- oder kastenförmig ausgebildet ist.

5. Proben-Röhrchen (2) nach einem der vorhergehenden Ansprüche, **dadurch gekennzeichnet, dass** das Proben-Röhrchen (2) im wesentlichen zylindrisch ausgebildet ist und an seiner Oberseite eine Schneide (7) zum Ausstanzen einer aufzunehmenden Portion (6) eines Proben-Trägers aufweist.

6. Proben-Röhrchen (2) nach Anspruch 1 oder 2, **dadurch gekennzeichnet, dass** der Klemmkörper (5) ein im wesentlichen zylindrisches Oberteil des Proben-Röhrchens ist, wobei dieses Proben-Röhrchen (2) zudem ein Unterteil (8) umfasst, das mit diesem Oberteil (5) dichtend zusammensteckbar ausgebildet ist.

7. Proben-Röhrchen (2) nach Anspruch 6, **dadurch gekennzeichnet, dass** das Oberteil (5) an seinem unteren Ende und/oder das Unterteil (8) an seinem oberen Ende eine Schneide (7) zum Ausstanzen einer aufzunehmenden Portion (6) eines Proben-Trägers aufweist.

8. Proben-Röhrchen (2) nach einem der Ansprüche 6 oder 7, **dadurch gekennzeichnet, dass** das Oberteil (5) an seinem unteren Ende oder das Unterteil (8) an seinem oberen Ende eine Muffe (9) zum dichtenden Einstecken des jeweils anderen Teils des Proben-Röhrchens aufweist.

9. Proben-Röhrchen (2) nach einem der vorhergehenden Ansprüche, **dadurch gekennzeichnet, dass** das Proben-Röhrchen (2) einen unteren Abschluss (10) aufweist.

10. Proben-Röhrchen (2) nach Anspruch 9, **dadurch gekennzeichnet, dass** der untere Abschluss (10) des Proben-Röhrchens eine Auslaufkapillare (11) aufweist.

11. Proben-Röhrchen (2) nach Anspruch 10, **dadurch gekennzeichnet, dass** die Auslaufkapillare (11) zentrisch angeordnet ist und der untere Abschluss (10) des Proben-Röhrchens zudem eine periphere Tropfenbarriere (12) aufweist.

12. Proben-Röhrchen (2) nach einem der Ansprüche 1 bis 4 oder 6 bis 11, **dadurch gekennzeichnet, dass** jedes Proben-Röhrchen an seiner Oberseite mit einer Folie (13) oder einem Stopfen (13') verschlossen ist.

13. System mit einer Vielzahl von in individuellen Aufnahmekavitäten von Racks (1) angeordneten und zusammen mit diesen Racks (1) robotisiert transportierbaren Proben-Röhrchen (2) zum individuellen Aufbewahren und Bereitstellen einer Vielzahl von Nukleinsäure enthaltenden Proben, wobei die, vorzugsweise 96 oder 384 Aufnahmekavitäten (3) der Racks (1) und die Proben-Röhrchen (2) zudem zum robotisierten Entfernen dieser Proben-Röhrchen (2) aus diesen Aufnahmekavitäten (3) ausgebildet sind, wobei jedes Proben-Röhrchen (2) einen inneren Absatz (4) zum Aufnehmen und einen Klemmkörper (5) zum klemmenden Fixieren einer einzigen zumindest eine DNA-Probe enthaltenden Portion (6) eines Proben-Trägers aufweist, und wobei der Proben-Träger ausgewählt ist aus einer Gruppe, die FTA-Papier, Filterpapiere, Zellulosemembranen und Trenngele umfasst, **dadurch gekennzeichnet, dass** das System zumindest zwei übereinander anordenbare Racks (1) und zumindest einen Manipulator (17) umfasst, wobei diese Racks (1) im System so übereinander positionierbar sind, dass zumindest ein Teil ihrer Kavitäten (3) im Register untereinander stehen, und wobei ein Manipulator (17) zum Stossen von Proben-Röhrchen (2) aus einem obenliegenden Rack (1) in entsprechend positionierte Aufnahmekavitäten (3) eines untenliegenden Racks (1) und/oder ein Manipulator (17) zum Stossen von Proben-Röhrchen (2) aus einem untenliegenden Rack (1) in entsprechend positionierte Aufnahmekavitäten (3) eines obenliegenden Racks (1) ausgebildet ist.

14. System nach Anspruch 13, **dadurch gekennzeichnet, dass** die Portion (6) des Proben-Trägers eine einzige individuelle DNA-Probe aufweist.

15. System nach Anspruch 13 oder 14, **dadurch gekennzeichnet, dass** es Proben-Röhrchen (2) nach einem der Ansprüche 2 bis 12 umfasst und dass die Racks (1) eine SBS Standfläche aufweisen.

16. System nach einem der Ansprüche 13 bis 15, **dadurch gekennzeichnet, dass** jedes Proben-Röhrchen (2) an seinem Aussenumfang zwei parallele Rippen (14) zum einschnappenden Positionieren der Proben-Röhrchen (2) an Erhebungen (15) von Trennwänden (16), welche die Aufnahmekavitäten (3) eines Racks (1) voneinander trennen, aufweist.

17. System nach Anspruch 13, **dadurch gekennzeichnet, dass** der Manipulator (17) zum gleichzeitigen Stossen von zwei oder mehr Proben-Röhrchen (2) ausgebildet ist.

18. System nach einem der Ansprüche 13 bis 17, **dadurch gekennzeichnet, dass** die Racks (1) eine Identifikation (18), vorzugsweise einen RFID-Tag oder Barcode, umfassen.

19. Verwendung von in individuellen Aufnahmekavitäten (3) von Racks (1) mit SBS Standfläche angeordneten und zusammen mit diesen robotisiert transportierbaren Proben-Röhrchen (2), wobei die Aufnahmekavitäten (3) der Racks (1) und die Proben-Röhrchen (2) zudem zum robotisierten Entfernen von einem oder mehreren dieser Proben-Röhrchen aus diesen Aufnahmekavitäten (3) ausgebildet sind; und von Proben-Trägern zum Aufbewahren und Bereitstellen von Nukleinsäure enthaltenden Proben, wobei jeweils eine zumindest eine DNA-Probe enthaltende Portion (6) eines Proben-Trägers in einem Proben-Röhrchen (2) aufbewahrt und dieses Proben-Röhrchen (2) in einer Aufnahmekavität (3) eines Racks (1) positioniert wird, wonach die Proben-Röhrchen (2) mit den Nukleinsäure enthaltenden Proben in einer vorbestimmten und variierbaren Anzahl, von vorzugsweise 1 bis 384 Proben-Röhrchen, bereitgestellt werden, und wobei die Proben-Träger ausgewählt sind aus einer Gruppe, die FTA-Papier, Filterpapiere, Zellulosemembranen und Trenngele umfasst, **dadurch gekennzeichnet, dass** zumindest zwei Racks (1) so übereinander angeordnet werden, dass zumindest ein Teil ihrer Kavitäten (3) im Register untereinander stehen, und dass mit zumindest einem Manipulator (17) Proben-Röhrchen (2) aus einem obenliegenden Rack (1) in entsprechend positionierte Aufnahmekavitäten (3) eines untenliegenden Racks (1) und/oder mit zumindest einem Manipulator (17) Proben-Röhrchen (2) aus einem untenliegenden Rack (1) in entsprechend positionierte Aufnahmekavitäten (3) eines obenliegenden Racks (1) gestossen werden.

20. Verwendung nach Anspruch 19, **dadurch gekennzeichnet, dass** die Proben-Röhrchen (2) mit den Nukleinsäure enthaltenden Proben in einer vorbestimmten und variierbaren Anordnung bereitgestellt werden.

21. Verwendung nach einem der Ansprüche 19 oder 20, **dadurch gekennzeichnet, dass** mittels einer Schneide (7) eine zumindest eine Probe enthaltende Portion (6) aus einem Proben-Träger ausgestanzt wird, wobei diese Schneide (7) an der Oberseite eines Proben-Röhrchens (2) angeordnet ist.

22. Verwendung nach einem der Ansprüche 19 oder 20, **dadurch gekennzeichnet, dass** mittels einer Schneide (7) eine zumindest eine Probe enthaltende Portion (6) aus einem Proben-Träger ausgestanzt wird, wobei diese Schneide (7) am unteren Ende des Oberteils (5) und/oder am oberen Ende des Unterteils (8) eines Proben-Röhrchens (2) angeordnet ist.

23. Verwendung nach einem der Ansprüche 19 oder 20, **dadurch gekennzeichnet, dass** mittels einer Schneide (7) eine zumindest eine Probe enthaltende Portion (6) aus einem Proben-Träger ausgestanzt wird, wobei diese Schneide (7) an einem Manipulator (17) eines Systems zum Aufbewahren und Bereitstellen einer Vielzahl von Nukleinsäure enthaltenden Proben angeordnet ist.

24. Verwendung nach einem der Ansprüche 19 oder 20, **dadurch gekennzeichnet, dass** das jedes Proben-Röhrchen an seiner Oberseite mit einer Folie (13) oder einem Stopfen (13') verschlossen wird.
